Europäisches Patentamt

European Patent Office

Office européen des brevets

(19)

(11) Publication number: **0 246 543 B1**

# EUROPEAN PATENT SPECIFICATION

(12)

(45) Date of publication of patent specification: **11.11.92**  (51) Int. Cl.⁵: **G02B 6/44**

(21) Application number: **87106869.8**

(22) Date of filing: **12.05.87**

(54) **Optical fibres submarine telecommunication cables and their manufacturing process.**

(30) Priority: **19.05.86 IT 2047886**

(43) Date of publication of application:
**25.11.87 Bulletin 87/48**

(45) Publication of the grant of the patent:
**11.11.92 Bulletin 92/46**

(84) Designated Contracting States:
**AT BE CH DE ES FR GB GR LI LU NL SE**

(56) References cited:
**DE-A- 3 225 228**
**FR-A- 2 494 452**
**GB-A- 2 052 092**
**GB-A- 2 082 790**
**GB-A- 2 157 848**

(73) Proprietor: **PIRELLI CAVI S.p.A.**
**Piazzale Cadorna, 5**
**I-20123 Milano(IT)**

(72) Inventor: **Gazzana Priaroggia, Paolo**
**Piazza S. Ambrogio 8**
**Milan(IT)**

(74) Representative: **Sirtori, Giorgio et al**
**Pirelli S.p.A. Direzione Brevetti Piazzale**
**Cadorna, 5**
**I-20123 Milano(IT)**

EP 0 246 543 B1

## Description

The present invention refers to submarine, optical-fibres telecommunication cables of the type, wherein the only mechanically resistant armouring, is a rope that occupies the radially innermost zone of the cable.

In the known submarine cables of the type in question, one example of which is described in GB-A-2.157.848, around the rope there is present a plastic core, provided with grooves on its outer surface wherein the optical-fibres are loosely housed.

In its turn, the core is covered with a plastic covering which serves for shutting the grooves.

A sheath made of a metallic material or of a plastic material, encloses all the above-indicated elements.

The present invention also refers to a process for manufacturing cables of the type in question.

In the known submarine cables, of the type briefly described hereabove, no armouring is present around the sheath for resisting the hydro-static pressure.

The resistance to stresses which are originated owing to the effects of the hydrostatic pressure, is obtained by entirely filling with a practically incompressible fluid every interspace existing in the cable and, in particu-lar, the spaces in-between the wires forming the rope and the grooves of the core, where the optical fibres are loosely housed.

By the term: 'practically incompressible fluid' - in this text, is meant liquid substances, preferably viscous, even having a high viscosity; but gases are excluded by this term.

The known submarine cables, of the type in question, protect in a very efficacious manner, the optical-fibres from the stresses that are originated in a cable, owing to the effect of the hydro-static pressure provided that not just the above said interspaces are entirely filled with the practically incompressible fluid, but that the plastic material of the core, wherein the grooves are made for housing the optical-fibres, are devoid of any imperfections.

In fact, if any imperfections exist inside the mass of plastic material forming the cable-core, they would form, for example, irregularly distributed micro-cavities, that practically cannot be filled-up with an incompressible fluid that results in a potential risk existing of this giving rise to micro-folds in the optical-fibres that, as a consequence, cause irreparable damages to take place, for the following reasons.

The hydro-static pressure causes stresses to originate in the radial direction of the cable and hence, also in the plastic core of the cable.

In such a situation, when in the plastic material with which the cable-core is formed, there are present irregularly distributed micro-porosities, that are obviously unfilled with an incompressible fluid, irregularities are verified in the deformation to which the plastic material is subjected.

In case the resulting irregularities in the deformation of the core, are translated into irregularities in the configuration of the grooves wherein the optical-fibres are loosely housed, this would create obstacles for the free movement of these latter and, as a consequence, the risk of micro-folds being formed in said optical-fibres would be given rise which, as known, prove to be extremely damaging since they could cause ruptures, or else, attenuations of the signals transmitted with therefore, putting the cable out of use.

The aim of the present invention are submarine optical-fibres telecommunication cables of the previously indicated type which, even if layed at great depths, are devoid of any potential risks of micro-folds being formed in the optical-fibres contained in them even though, at the time of the formation of the core, imperfections were present in the plastic material used.

Another aim of the present invention is increasing the facility in executing the joints between submarine optical-fibres cables of the type in question, for in this way increasing their reliablity.

Yet another aim of the present invention is to realize in an efficacious and secure manner, the entire filling-up of the grooves of the cable-core wherein the optical-fibres are loosely housed, with a practically incompressible fluid.

The object of the present invention, is a submarine optical-fibres telecommunication cable, comprising a compact anti-torsional rope in which every interspace existing between the comprising wires is filled with a practically incompressible fluid, said rope disposed in the cable's radially innermost zone, a plastic material core, surrounding said rope, where there are present grooves separated from one another by ribs, communicating with the radially outer surface of said core, that extend in the longitudinal direction of the cable, and which are filled with a practically incompressible fluid, wherein the optical-fibres are loosely housed, and a sheath (7) encasing said core, said cable being characterized by the fact that, in the section perpendicular to the cable axis, each groove whose profile is defined by the ribs, separating one groove from those adjacent to it, in the absence of the sheath, presents a curvilinear configuration and also diverging edges, whereas, in the presence of the sheath, each groove presents a circular configuration with reciprocally parallel edges, the ratio, at least between the maximum diametral dimension of the core, in correspondence of the ribs separating the grooves, and the internal diameter of the sheath being greater than 1, in the absence of a sheath, and equal to 1, when core and sheath are in reciprocal contact.

Also forming the object of the present invention, is a process for manufacturing submarine optical-fibres telecommunication cables, comprising the steps of:

- impregnating a rope, which forms the mechanically resistent armouring of a cable, with a practically incompressible fluid and also completely filling every interspace existing between the component wires, with said fluid;
- forming around the rope, by means of extrusion, a plastic core provided with grooves opening onto its outer surface;
- disposing at least one optical fibre inside each of the grooves;
- inserting a practically incompressible fluid into the grooves;
- applying a sheath around the plastic material core of the cable;

characterized by the fact of comprising the step of subjecting the plastic core to radial compression, with so reducing its outer diametral dimensions to the same value as that of the inner diameter of the sheath, with drawing the edges of the core grooves closer, and rendering them to be parallel to one another.

The present invention will be better understood from the following detailed description, made solely by way of non limiting example, with referring to the figures of the attached drawing sheets, whereby:

FIG. 1 -     shows a perspective view of a cable length, according to the invention;

FIG. 2 -     shows a section perpendicular to the axis, of a cable length in the absence of a sheath, according to the invention;

FIG. 3 -     schematically shows a lateral view of a line of realization of the process for manufacturing cables, according to the invention.

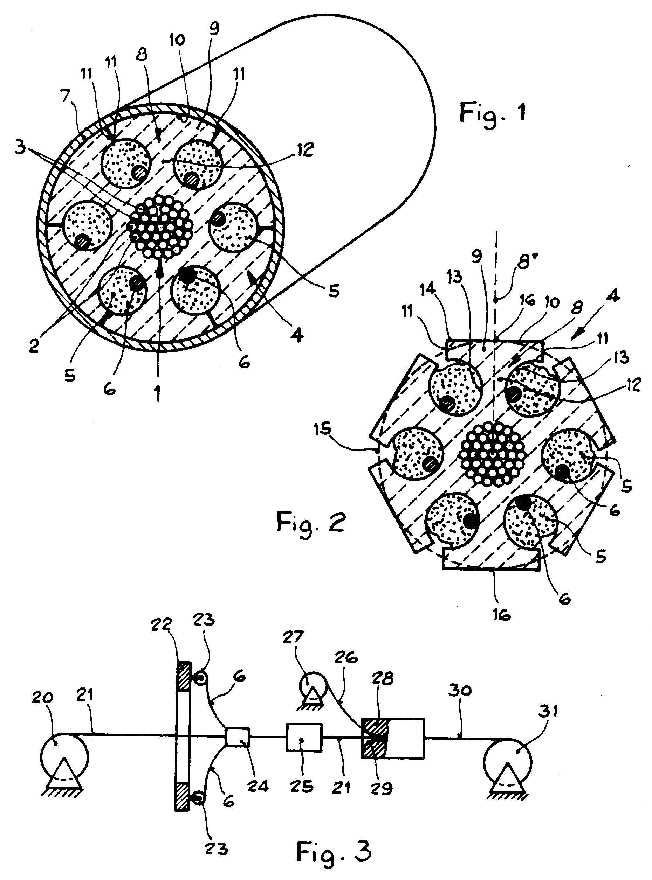

As can be seen in FIGS. 1 and 2, proceeding from inside towards outside, a submarine optical-fibres telecommunication cable, according to the invention, has a structure that is described herebelow.

A compact antitorsional rope, dimensioned for resisting all the stresses that can be imparted to the cable during the laying operation, or during the cable-raising operation, occupies the radially innermost position.

Said rope 1, that is formed by a plurality of wires 2 made of a material having a high mechanical-resistance to tractions, such as: steel, aromatic polyamids, carbon fibres and suchlike, has the void spaces 3 in-between said wires 3, completely filled-up with a practically incompressible fluid.

Examples of such practically incompressible fluids, are petroleum jelly, silicone greases, and suchlike.

Moreover, to the rope 1 there can also be incorporated a wire, or a tape made of a material having a high conductivity such as, for example, copper used for feeding optoelectronic repeaters of the signals transmitted by the optical-fibres.

Around the rope 1, there is present a plastic material core 4, that adheres perfectly to the outer surface of the rope 1 and fills-up every interspace existing between the adjacent wires 2 with which the outermost crown of wires of the rope itself, is formed.

Any whatsoever plastic material can be used for forming the core 4, but preferably, the core 4 is made of an aliphatic polyamid, of a polybutylene terephthalate, and suchlike materials that present a low deformation when subjected to compression.

On the core 4 there are present a plurality of grooves 5, where optical-fibres 6 are loosely housed. And, as shown in FIG. 1, these grooves 5 are practically completely filled with an incompressible fluid and preferably, identical to the fluid which fills-up the interspaces 3 between the wires 2 that form the rope 1.

The grooves 5 extend in the longitudinal direction of the cable and they present, with respect to the cable axis, a closed-helix lay-out, or else, an open-helix lay-out, intending by said latter terms, that the lay-out of the grooves is formed by alternating S-shaped lengths and Z-shaped lengths.

The essential characteristics of the core 4 of the cables according to the invention, will be given further on in the text.

As shown in FIG. 1, a sheath 7 made out of a metallic, or a plastic material, surrounds the core 4.

The sheath 7 can be formed by extrusion means, or else, by winding a tape around the core 4 in such a manner as to dispose, end-to-end (along a generatrix of the tubular body, with which it is formed), the longitudinal edges which are reciprocally joined through welding, or suchlike.

If the sheath 7 is made out of a metallic material, it can also serve as an electrical conductor of the circuit for allowing to feed the optoelectronic repeaters of the signals transmitted by the optical-fibres. Around the said sheath (not shown in the figures) there is disposed a layer of plastic, for example, polyethylene.

But, if the sheath 7 is made out of a plastic material, one of the electrical conductor of the circuit for feeding the optoelectronic repeaters of the signals transmitted by the optical-fibres, is the sea itself, or, as an alternative, a conductor embedded in the plastic material of the sheath.

Moreover, around the sheath 7 there can also be foreseen other, per se known protections (not shown), of the type commonly used for submarine cables such as, for example, anti-shipworm protections and suchlike, and eventually the usual protections that are used for opposing the impacts which could be caused by submerged bodies, such as: fishing nets, anchors, and suchlike. There can also be foreseen those devices used for weighing-down the cable itself, for preventing any possible shifting of the cable, under the action of underwater currents.

For submarine optical-fibres telecommunication cables, according to the invention, the characteristics of the core 4, that will be given herebelow, are essential.

One essential characteristic is that, in the section perpendicular to the cable-axis, the single grooves 5 whose profile is defined by the shape of the ribs which separate adjacent grooves from each other, should present a curvilinear form, with edges diverging towards the outer surface of the core 4 when said latter is not in contact with the sheath 7.

Instead, when the core 4 is in contact with the sheath 7, said grooves must present a circular shaped section and with parallel edges; preferably, the edges are in reciprocal contact with each other.

An other essential characteristic for cables according to the invention, is that when the core 4 does not contact the sheath 7, the ratio at least between the maximum diametral dimension of the core in correspondence of the ribs and the inner diameter of the sheath, is greater than 1, and that said ratio is equal to 1, when core 4 and sheath 7 are in reciprocal contact.

In FIGS. 1 and 2, concerning a cable according to the present invention, there are shown a particular form of embodiment for the cable core 4 that presents the above-said characteristics, which are considered essential for the scope of the present discovery.

As can be seen in FIG. 2 (which shows a transversal section of the cable core 4, when it is not in contact with the sheath) the adjacent ribs 8 that separate and define each groove 6, have substantially a T-shape profile with the head 9 delimited by rectilineal tracts 10 and 11 and the leg 12 having curvilinear flanks 13, joined to the head 9.

More particularly, the rectilineal tract 10 that represents the radially outermost profile of the head 9 of each rib 8, is tangent to a circle having a diameter equal to the inner diameter of the sheath in correspondence of the point of intersection of the axis of symmmetry 8′ of the rib 8 lying in a radial plane containing the cable axis.

Instead, the rectilineal tracts 11, which represent the lateral edges of the head 9, are substantially perpendicular to the rectilineal tract 10.

Subsequent to the above-said conformation of the ribs 8, each groove 6 presents a curvilinear form, deriving from the curvilinear form 13 of the flanks of the legs 12 of two adjacent ribs 8, and edges 11 diverging towards the outer surface of the core 4.

Moreover, as shown in FIG. 2, the ratio between the maximum diametral dimensions of the core 4 (as verifiable in correspondence of the corners 14 of the ribs 8) and the inner diameter of the sheath (which, in the particular form of embodiment shown, is the diameter of the circle 15) that is tangent at the mid-point 16 of the single ribs, is greater than 1.

The fact that, in the particular form of embodiment illustrated in the FIG. 2, the circle 15 (shown with a broken-line), representing the path of the inner surface of the sheath, is tangent at the mid-plane 16 of heads 9 of the ribs 8, must not to be taken in any limited sense. In fact, the circle which defines the profile of the inner surface of the sheath, can also have a diameter that is a little less than that of the circle represented in FIG. 2.

The choice of a particular circle, that defines the inner profile of the sheath of a cable according to the invention, was dictated only by the entity of the compression that is desired to be imparted to the plastic material out of which the cable core is formed.

The entity of said compression depends upon the depth at which the cable is layed and upon the entity of the imperfections (microporosities) that one can expect to find in the plastic material as a function of the particular polymer used and upon the particular operative conditions of production that are adopted. All these elements are usually known to the one skilled in the art, and allow him for every particular form of realization, to establish the optimal value for the inner diameter of the cable sheath.

The applying of a sheath, over the core of the cable shown in FIG. 2, causes a deformation (of the elastic type, or of the thermodilatable type, depending upon the conditions under which said deformation is effectuated), of said core whose form becomes modified for so allowing it to assume that form illustrated in FIG.1.

As a consequence, in FIG. 1, the ratio between the maximum diametral dimensions of the core 4 and the internal diameter of the sheath 7, is equal to 1.

Moreover, as shown in FIG.1, the grooves 5 have assumed a circular form and the edges 11, are parallel and lie in radial planes containing the cable axis; in particular, the said edges 11 are, for preference, in reciprocal contact and said grooves 5 are completely filled-up with the incompressible fluid which was introduced in a dosed quantity, in them, when the core 4 had the configuration represented in FIG. 2.

In addition to this, the head 9 of the single ribs 8 has assumed an arc of a circle configuration, with having an equal diameter as that of the inner diameter of the sheath.

A cable, according to the invention, is manufactured with a process that also forms object of the present invention and which can be carried out by means of a line that is shown schematically in FIG. 3.

The first phase of the process consists in impregnating with a practically incompressible fluid, such as for example, a petroleum jelly, a silicone grease and suchlike, a compact anti-torsional rope intended to form the mechanically-resistant armouring of the cable.

During this impregnating step, each interspace existing between the component wires of the rope, are filled-up with the incompressible fluid.

There now follows the phase of forming, through extrusion means, around the core and in contact with it, a plastic core provided with grooves debouching on its radially outermost surface.

In particular, the plastic core formed during this step, presents larger diametral dimensions than the inner diameter of the sheath, foreseen for the cable to be manufactured.

Moreover, the grooves present in the plastic core have, in the section perpendicular to the cable axis, a curvilinear form and diverging edges.

In a particular form of embodiment, the plastic core of the cable, has the configuration illustrated in FIG. 2.

The complex of the rope-plastic core 21, formed in the previous steps, can be caused to advance towards workstations where the successive phases of the process are carried out, or else, it can be collected on a bobbin 20 till such time as it is subjected to the said successive phases.

In the latter instance, the complex of the rope-core 21, is unwound from the bobbin 20, on which it was wound, and subjected to the step of disposing at least one optical-fibre in each groove of the cable core.

For effectuating this step, the rope-core 21 complex, is caused to pass into a device that is known per se, which comprises a rotating cage 22 on which are mounted the reels 23, on which the optical-fibres 6 are stored and from where these latter are unwound for being inserted into the grooves of the core, by means of perforated appendices in a mechanism 24, of a per se known type, that is apt for the purpose.

There now follow the steps of introducing into the grooves an imcompressible fluid at room-temperature, such as, for example, a petroleum jelly, or else, a silicone grease, by means of a per se known doser 25 provided with nozzles whose ends are positioned inside the grooves.

In particular, the incompressible fluid at room-temperature, that is inserted into the grooves, has a volume quantity per unit of the groove length that is at least equal to the volume per length unit, which this latter has after the sheath is applied around the core.

When the above-said step has ended with originating, for example, the structure shown in FIG. 2, the further steps of subjecting the plastic core of the cable to a radial compression, take place.

Through said radial compression, the outer diametral dimensions of said core, are reduced to a value which is equal to that of the inner diameter of the cable sheath which is then formed on it. Simultaneously, the form of the transversal section of the single grooves is modified in such a way as to give them a circular configuration and moreover, with disposing the edges of the said grooves parallelly and preferably, in reciprocal contact.

The cable sheath can be formed by extruding plastic, or metallic material around the core, that is already-formed through radial compression in the previously indicated way.

As an alternative, the sheath can be obtained by longitudinally folding a metallic tape, around the core already-formed through radial compression, in such a manner as to dispose, in an end-to-end way, the longitudinal edges that are welded, or however, reciprocally joined together in a stable way.

In the latter instance (as shown in FIG. 3), a metallic tape 26, coming from a bobbin 27, is made to transit along with the rope-core 21 complex (having for example, the structure illustrated in FIG. 2) inside a body 28 provided with a funnel shaped through-cavity 29, wherein the plastic core is deformed by means of radial compression, and where a tubular form is conferred to the tape 26 whose longitudinal edges are reciprocally welded end-to-end, on its exiting from the body 28, with thus realizing the sheath.

During the radial compression exercised on the plastic cable core, there can also be effectuated a heating at least of the outermost portion of the core, for conferring a thermo-deformability to the plastic material that forms it, for example, through a direct heat-conduction by the body 28 which, in this instance, is provided with heating means.

The cable 30, manufactured by means of the process described above (that for example, has the structure shown in FIG. 1) can be collected directly on bobbin 31, or, alternatively, prior to its being collected on a bobbin, the cable provided with a sheath is subjected to a further compacting operation by passing it through a threading-die, or else by subjecting it to rolling for having a radial compression, for guaranteeing, in an absolute manner, a perfect adhesion between core and sheath, at every point.

In the process, according to the invention, the phases for deforming the plastic sheath by radial compression for so forming the cable-sheath around said core and for rendering the sheath to adhere perfectly to the core, can either be carried out simultaneously or else, in successive stages through the means of per se known equipment suited for this purpose.

In the latter instance, the plastic core, in whose grooves the optical-fibres as well as the practically incompressible fluid are already present, are firstly subjected to a radial compression, inside a threading-die (not shown), that is for example, heated to a temperatures of 150°.

On issuing from the threading-die, a sheath - metallic, for example, is formed around the core - through the means of any whatsoever equipment that is apt for the purpose.

Successively, the thus-obtained cable is subjected to a further compacting, by subjecting it to rolling, or by passing it through another threading die that assures a complete and close contact between core and sheath.

From the description of both, a cable according to the invention, as well as its above-described manufacturing process, and from the following considerations, it is comprehensible that the proposed aims are reached.

The fact that, in a cable according to the invention, the plastic core enclosed in the sheath is in a radially compressed state signifies that the plastic material of the said core is in a compact state and hence, that any eventual microporosity existing, was eliminated owing to this compacting.

This means that, in a cable according to the invention, there exists a reasonable certainty that, no un-filled void spaces are present in the cable and that as a consequence, the cable's resistance to hydrostatic pressure is optimized. Therefore, there must no longer be feared any localized yielding of the plastic material forming the core nor any consequent originating of eventual local deformations in the section of the grooves, that could obstruct the movements of the optical-fibres.

Moreover, what prevents any local deformations being originated in the grooves consequent to the compacting exercised on the plastic material of the cable-core, is the particular curvilinear form, with diverging edges of the grooves, that are transformable, after the compacting, into a circular form with parallel edges. Consequently, any potential risk is eliminated of micro-folds being originated in the optical-fibres of the cable.

Moreover, the optimization of the resistance to hydro-static pressure, in a cable according to the invention, is also assured by the fact that, in the cable, it is possible to obtain, in a reliable manner, a complete filling-up of every point of the grooves housing the optical-fibres, with a practically incompressible fluid, in spite of the fact that, in the cable provided with a sheath, the said grooves result as being formed by circular-shaped through cavities shut outwardly for better protecting the optical-fibres.

The attainment of this result, is a consequence of the fact that the inserting of the practically incompressible fluid into the grooves, is carried out while said grooves are open outwardly. Firstly, this operation is easy to effectuate, and this facility allows for introducing the practically incompressible fluid at room-temperature, that substantially corresponds to the working temperature of the cable.

The inserting into the grooves of practically incompressible fluid at room-temperature, obviates any volume variations in the fluid resulting from thermal variations occurring during cable construction. Hence, any risk is eliminated of having an incomplete filling-up of said grooves owing to the shrinking effects resulting from said thermal expansions in the fluid, whose evaluation, as those skilled in the art know, is difficult and uncertain.

Moreover, the fact that the plastic material cable core, according to the invention, was subjected to radial compression for applying a sheath, allows for the realizing of the jointing to become easier and more reliable. In fact, when realizing a jointing which requires the sheath to be removed from the extremities of the two cable lengths to be joined, the opening of the grooves outwardly, takes place in a practically automatic way, after the sheath has been removed. This fact renders easy the access to the optical-fibres of each cable length that must be reciprocally joined end-to-end, when realizing the jointing.

In fact, on the removal of the sheath, the plastic material of the core is freed from the compressional stresses existing in it, and the opening of the grooves is effectively automatic if the compressional state of the plastic material of the core is within the elastic field. Nevertheless, if the deformation due to the effects of the radial compression exercised on the core, takes place in the plastic field, then a simple heating of the outer surface of the core, with its consequent automatic thermo-dilation, causes, without any further operations, the grooves to open.

Although certain particular forms of realization, according to the invention, have been illustrated and described here, what has also to be comprised within its ambit are all the possible alternative variations of the inventive principle, that are accessible to the one skilled in the art.

## Claims

1. Submarine optical-fibres telecommunication cable, comprising a compact anti-torsional rope (1) in which every interspace existing between the comprising wires, is filled with a practically incompressible fluid, said rope disposed in the cable's radially innermost zone, a plastic material core (4) surrounding said rope (1), in which there are present grooves (5), separated from one another by ribs (8), communicating with the radially outer surface of said core, that extend in the longitudinal direction of the cable, and which are filled with a practically incompressible fluid wherein the optical-fibres (6) are loosely housed, and a sheath (7) encasing said core, said cable being characterized by the fact that, in the section perpendicular to the cable axis, each groove (5) whose profile is defined by the ribs (8), separating one groove from those adjacent to it, in the absence of the sheath (7) presents a curvilinear configuration and also diverging edges (11), whereas when in the presence of the sheath (7), each groove (7) presents a circular configuration with reciprocally parallel edges (11), the ratio, at least between the maximum diametral dimension of the core (4), in correspondence of the ribs (8) separating the grooves (5), and the internal diameter of the sheath (7), being greater than 1, in the absence of a sheath (7), and equal to 1, when core (4) and sheath (7) are in reciprocal contact.

2. Cable, according to CLAIM 1, characterized by the fact that, in the presence of a sheath (7), the reciprocally parallel edges (11), of each groove (5), are in reciprocal contact.

3. Cable, according to CLAIM 1, characterized by the fact that, at least the radially outermost portion of the cable core is expandable, after sheath (7) has been removed.

4. Cable, according to CLAIM 1, characterized by the fact that the ribs (8) for separating the adjacent grooves (5), that define the profile of said grooves themselves, have a substantially T-shape, in the section perpendicular to the cable axis, with the axis (8') of symmetry lying in a radial plane containing the cable axis, said T-shape presenting in the the absence of a sheath (7), a leg (12) having a curvilinear outline connected to the T-shaped head (9), the outermost radial profile of the head being rectilinear and tangent to a circle (15) having an equal diameter to that of the inner diameter of the sheath (7), while the lateral edges (11) of said head, are rectilinear and perpendicular to the radially outermost profile of the latter, in the presence of a sheath (7) said T-shape having the radially outermost profile of the head in the form of an arc of a circle with an equal diameter to that of the inner diameter of the sheath (7), the lateral edges (11) of the heads of the adjacent ribs (8) being rectilinear and facing one another and with the legs (12) of the adjacent ribs (8) defining between them, a circular cavity in the section perpendicular to the cable axis.

5. Process for manufacturing submarine optical-fibres telecommunication cables, comprising the steps of:
   - impregnating a rope (1), which forms the mechanically resistent armouring of a cable, with a practically incompressible fluid and also completely filling every interspace existing between the component wires, with said fluid;
   - forming around the rope (1) by means of extrusion, a plastic core provided with grooves (5) opening onto its outer surface;
   - disposing at least one optical fibre (6) inside each of the grooves (5);
   - inserting a practically incompressible fluid into the grooves (5);
   - applying a sheath (7) around the plastic material core (4) of the cable;
   characterized by the fact of comprising the step of subjecting the plastic core (4) to radial compression, with so reducing its outer diametral dimensions to the same value as that of the inner diameter of the sheath (7) with drawing the edges (11) of the core grooves (5) closer, and rendering the edges of said grooves to be parallel to one another.

6. Process, according to CLAIM 5, characterized by the fact that in the phase of subjecting the plastic core (4) of the cable to radial compression, with reducing its diametral dimensions, the edges (11) of the grooves (5) present in the core (4), are brought into reciprocal contact.

7. Process, according to CLAIM 5, characterized by the fact that in the phase of subjecting the plastic core (4) to radial compression, there is effectuated a heating of the radially outermost portion of the same.

**8.** Process, according to CLAIM 5, characterized by the fact that, in the phase of inserting a practically incompressible fluid into the grooves (5), said fluid is inserted at a room-temperature in a quantity in volume per groove (5) length unit that is at least equal to the volume per length unit had, by said grooves (5), after the phase of subjecting said core (4) to a radial compression.

**9.** Process, according to CLAIM 5, characterized by the fact that the phase of subjecting the plastic core (4) of the cable to a radial compression, is prior to the phase of applying the sheath (7) around said core, and that a phase of compacting, through compression, is effectuated on the produced cable.

**Patentansprüche**

**1.** Optisches Unterwassernachrichtenkabel, umfassend ein gegen Drehung widerstandsfähiges kompaktes Seil (1), bei welchem jeder zwischen den das Seil bildenden Drähten vorhandene Zwischenraum mit einem praktisch inkompressiblen Fluid gefüllt ist, wobei das Seil in der radial inneren Zone des Kabels angeordnet ist, ein Kern (4) aus plastischem Material das Seil (1) umgibt und in dem Kern (4) Nuten (5) vorhanden sind, die durch Rippen (8) voneinander getrennt sind, mit der radial äußeren Fläche des Kerns in Verbindung stehen, sich in Längsrichtung des Kabels erstrekken, mit einem praktisch inkompressiblem Fluid gefüllt sind und in denen die optischen Fasern (6) lose aufgenommen sind, und einen Mantel (7), der den Kern umschließt, dadurch **gekennzeichnet,** daß in dem Querschnitt rechtwinkelig zur Kabelachse jede Nut (5), deren Profil durch die Rippen (8) bestimmt ist, welche eine Nut von der ihr benachbarten Nut trennen, bei Nichtvorhandensein des Mantels (7) eine gekrümmte Gestalt und divergierende Kanten (11) darbietet, wohingegen beim Vorhandensein des Mantels (7) jede Nut (5) eine kreisförmige Gestalt mit gegenseitig parallelen Kanten (11) darbietet, wobei das Verhältnis wenigstens zwischen der maximalen diametralen Abmessung des Kerns (4) im Bereich der die Nuten (5) trennenden Rippen (8) und dem Innendurchmesser des Mantels (7) bei Nichtvorhandensein des Mantels (7) größer als 1 und bei gegenseitiger Berührung zwischen Kern (4) und Mantel (7) gleich 1 ist.

**2.** Kabel nach Anspruch 1, dadurch gekennzeichnet, daß bei Vorhandensein des Mantels (7) die gegenseitig parallelen Kanten (11) jeder Nut (5) sich in gegenseitiger Berührung befinden.

**3.** Kabel nach Anspruch 1, dadurch gekennzeichnet, daß wenigstens der radial äußere Teil des Kabelkerns ausdehnbar ist, nachdem der Mantel (7) entfernt worden ist.

**4.** Kabel nach Anspruch 1, dadurch gekennzeichnet, daß die Rippen (8) zum Trennen der benachbarten Nuten (5), welche das Profil der Nuten bestimmen, in dem Querschnitt rechtwinkelig zur Kabelachse im wesentlichen T-Gestalt haben, deren Symmetrieachse (8') in einer die Kabelachse enthaltenden radialen Ebene liegt, wobei die T-Gestalt bei Nichtvorhandensein des Mantels (7) einen Schenkel (12) darbietet, der gekrümmten Umriß hat, welcher mit dem T-förmigen Kopf (9) verbunden ist, das äußere radiale Profil des Kopfes geradlinig und tangential an einen Kreis (15) verläuft, der einen Durchmesser hat gleich dem Innendurchmesser des Mantels (7), während die Seitenkanten (11) des Kopfes geradlinig und rechtwinklig zum radial äußeren Profil des Kopfes verlaufen, und bei Vorhandensein des Mantels (7) das radial äußere Profil des Kopfes der T-Gestalt in Form eines Kreisbogens vorhanden ist, dessen Durchmesser gleich dem Innendurchmesser des Mantels (7) ist, die Seitenkanten (11) der Köpfe der benachbarten Rippen (8) geradlinig und einander zugewandt sind, und die Schenkel (12) der benachbarten Rippen (8) zwischen sich in dem Querschnitt rechtwinkelig zur Kabelachse einen kreisförmigen Hohlraum bestimmen.

**5.** Verfahren zum Herstellen von optischen Unterwassernachrichtenkabeln, umfassend die Schritte des
- Imprägnierens eines Seiles (1), welches eine mechanisch widerstandsfähige Bewehrung eines Kabels bildet, mit einem praktisch inkompressiblen Fluid und des vollständigen Füllens jedes Zwischenraumes, der zwischen den Komponentendrähten vorhanden ist, mit dem Fluid;
- Bildens rund um das Seil (1) mittels Extrusion eines plastischen Kerns, der auf seiner Außenfläche mit Nuten (5) versehen ist;
- Anordnens wenigstens einer optischen Faser (6) in jeder der Nuten (5);
- Einbringens eines praktisch inkompressiblen Fluids in die Nuten (5); und des
- Aufbringens eines Mantels (7) rund um den Kern (4) aus plastischem Material des Kabels;

dadurch gekennzeichnet, daß der plastische Kern (4) radialem Zusammendrücken unterworfen wird derart, daß seine äußere diametrale Abmessung auf den gleichen Wert der diametralen Abmessung des Innendurchmessers des Mantels (7) verringert wird, wobei die Kanten (11) der Kernnuten (5) enger zueinander gezogen und die Kanten der Nuten in parallele Lage zueinander gebracht werden.

6. Verfahren nach Anspruch 5, dadurch gekennzeichnet, daß in der Phase, in welcher der plastische Kern (4) des Kabels radialem Zusammendrücken unterworfen wird, wobei seine diametralen Abmessungen verringert werden, die Kanten (11) der in dem Kern (4) vorhandenen Nuten (5) in gegenseitige Berührung gebracht werden.

7. Verfahren nach Anspruch 5, dadurch gekennzeichnet, daß in der Phase, in welcher der plastische Kern (4) radialem Zusammendrücken unterworfen wird, der radial äußere Teil des Kerns erwärmt wird.

8. Verfahren nach Anspruch 5, dadurch gekennzeichnet, daß in der Phase des Einbringens eines praktisch inkompressiblen Fluids in die Nuten (5) das Fluid bei Raumtemperatur in einer Menge je Längeneinheit der Nut (5) eingebracht wird, die wenigstens gleich dem Volumen je Längeneinheit ist, welches die Nuten (5) nach der Phase haben, in welcher der Kern (4) einem radialen Zusammendrücken unterworfen wird.

9. Verfahren nach Anspruch 5, dadurch gekennzeichnet, daß die Phase, in welcher der plastische Kern (4) des Kabels einem radialen Zusammendrücken unterworfen wird, vor der Phase liegt, in welcher der Mantel (7) rund um den Kern aufgebracht wird, und daß an dem hergestellten Kabel eine Phase des Kompaktierens mittels Zusammendrücken ausgeführt wird.

**Revendications**

1. Câble de télécommunication sous-marin à fibres optiques, comprenant un cordage compact anti-torsion (1) dans lequel chaque espace existant entre les fils composant le cordage est rempli d'un fluide pratiquement incompressible, ledit cordage (1) étant disposé dans la zone du câble située radialement le plus à l'intérieur, un noyau en matière plastique (4) entourant ledit cordage (1), noyau dans lequel se trouvent des rainures (6) séparées les unes des autres par des nervures (8), communiquant avec la surface radialement extérieure du noyau, s'étendant dans la direction longitudinale du câble et qui sont remplies d'un fluide pratiquement incompressible dans lequel les fibres optiques (6) sont logées de manière lâche, ainsi qu'une gaine (7) enrobant ledit noyau, câble qui est caractérisé en ce que, dans la section droite du câble, chaque rainure (5), dont le profil est défini par les nervures (8) séparant chaque rainure de celles lui étant adjacentes, présente en l'absence de la gaine (7) une configuration curviligne ainsi que des arêtes (11) divergentes, alors qu'en présence de la gaine (7) chaque rainure (5) présente une configuration circulaire comportant des arêtes (11) réciproquement parallèles, le rapport, au moins entre la dimension diamétrale maximale du noyau (4), en relation avec les nervures (8) séparant les rainures (5), et le diamètre intérieur de la gaine (7), étant plus grand que 1 en l'absence de la gaine (7), et égal à 1 lorsque le noyau (4) et la gaine (7) sont en contact réciproque.

2. Câble selon la revendication 1, caractérisé en ce qu'en présence de la gaine (7), les arêtes (11) réciproquement parallèles de chaque rainure (5), sont en contact réciproque.

3. Câble selon la revendication 1, caractérisé en ce qu'au moins la partie du noyau de câble radialement le plus à l'extérieur est expansible après que la gaine ait été enlevée.

4. Câble selon la revendication 1, caractérisé en ce que les nervures (8), séparant les rainures adjacentes (5) et définissant le profil des rainures elles-mêmes, sont sensiblement en forme de T dans la section droite du câble, l'axe de symétrie (8) se trouvant dans un plan radial contenant l'axe du câble, cette forme en T présentant, en l'absence de la gaine (7), un pied (12) ayant un contour curviligne rattaché à la tête (9) en forme de T, le profil de la tête radialement le plus à l'extérieur étant rectiligne et tangent à un cercle (15) ayant un diamètre égal au diamètre intérieur de la gaine (7), tandis que les arêtes latérales (11) de ladite tête sont rectilignes et perpendiculaires au profil de cette dernière radialement le plus à l'extérieur en présence de la gaine (7), le profil de la tête de la forme en T radialement le plus à l'extérieur ayant la forme d'un arc de cercle présentant un diamètre égal au diamètre intérieur de la gaine (7), les arêtes latérales (11) des têtes des nervures adjacentes (8) étant rectilignes et se faisant mutuellement face, et les pieds (12) des nervures adjacentes (8) définissant entre eux une cavité circulaire dans la section droite du câble.

5.  Procédé de fabrication de câbles de télécommunication sous-marins à fibres optiques, comprenant les étapes suivantes :
    -   imprégner un cordage (1), qui forme l'armature mécaniquement résistante d'un câble, d'un fluide pratiquement incompressible et remplir aussi complètement chaque espace existant entre les fils composant le cordage, avec ledit fluide ;
    -   former autour du cordage (1), par extrusion, un noyau de plastique pourvu de rainures (5) s'ouvrant sur la surface extérieure de celui-ci ;
    -   disposer au moins une fibre optique (6) dans chacune des rainures (5) ;
    -   introduire un fluide pratiquement incompressible dans les rainures (5) ; et
    -   appliquer une gaine (7) autour du noyau (4) en matière plastique du câble ;

    caractérisé en ce qu'il comprend l'étape consistant à soumettre le noyau en plastique (4) à une compression radiale, en réduisant aussi ses dimensions diamétrales extérieures à la même valeur que celles du diamètre intérieur de la gaine (7), et en rapprochant les arêtes (11) des rainures (5) du noyau, et en rendant les arêtes de ces rainures parallèles entre elles.

6.  Procédé selon la revendication 5, caractérisé en ce que, dans la phase où on soumet le noyau en plastique (4) du câble à une compression radiale, en réduisant ses dimensions diamétrales, les arêtes (11) des rainures (5) situées dans le noyau (4) sont amenées en contact réciproque.

7.  Procédé selon la revendication 5, caractérisé en ce que dans la phase où on soumet le noyau en plastique (4) à une compression radiale, on effectue un échauffement de la partie de celui-ci radialement le plus à l'extérieur.

8.  Procédé selon la revendication 5, caractérisé en ce que, dans la phase où on introduit un fluide pratiquement incompressible dans les rainures (5), ce fluide est introduit à température ambiante en une quantité, mesurée en volume par unité de longueur de la rainure (5), qui est au moins égale au volume par unité de longueur qu'ont lesdites rainures (5) après la phase où on soumet lesdit noyau (4) à une compression radiale.

9.  Procédé selon la revendication 5, caractérisé en ce que la phase, où on soumet le noyau en plastique (4) du câble à une compression radiale, est antérieure à la phase où on applique la gaine (7) autour dudit noyau, et en ce qu'une phase de compactage, par compression, est effectuée sur le câble produit.

Fig. 1

Fig. 2

Fig. 3